Europäisches Patentamt

European Patent Office

Office européen des brevets

(11) Publication number: **0 044 121**
**B1**

# EUROPEAN PATENT SPECIFICATION

(45) Date of publication of patent specification: 03.07.85

(51) Int. Cl.⁴: **G 11 B 7/00**

(21) Application number: 81201021.3

(22) Date of filing: 27.03.79

(60) Publication number of the earlier application in accordance with Art. 76 EPC: **0 005 316**

(54) Method of writing signal information on a disc.

(30) Priority: 27.03.78 US 890407
27.03.78 US 890771

(43) Date of publication of application:
20.01.82 Bulletin 82/03

(45) Publication of the grant of the patent:
03.07.85 Bulletin 85/27

(84) Designated Contracting States:
BE CH DE FR GB IT NL SE

(56) References cited:
DE-A-2 521 695
FR-A-2 358 797
US-A-3 562 422
US-A-3 708 797
US-A-3 738 755

IEEE TRANSACTIONS ON AEROSPACE AND
ELECTRONIC SYSTEMS, vol. AES-5, no. 3, May
1969, pages 463-473, New York (USA) R.P.
RUFER: "An electrooptical automatic gain
control"

(73) Proprietor: DISCOVISION ASSOCIATES
P.O. Box 6600 3300 Hyland Avenue
Costa Mesa California 92626 (US)

(72) Inventor: Wilkinson, Richard L.
21341 Avenida Manantial
E. Toro California 92630 (US)
Inventor: Winslow, John S.
4380, Canyon Crest Road
Altadena California 91001 (US)

(74) Representative: Arthur, George Fitzgerald et al
KILBURN & STRODE 30, John Street
London WC1N 2DD (GB)

Courier Press, Leamington Spa, England.

## Description

The present application is one of a series of related applications consisting of EP—A—5 316 (the parent case) and divisional applications EP—A—44 121, EP—A—44 122, EP—A—44 603, EP—A—45 117 and EP—A—48 041. These cases are all concerned with recording information on a surface with a modulated radiation beam, the surface changing its characteristics when the radiation exceeds a threshold level. EP—A—5 316, EP—A—44 122 and EP—A—4 448 041 are concerned especially with feedback to keep the average intensity of the radiation reaching the surface equal to the threshold level; EP—A—44 603 also uses such feedback, in addition to a control for the intensity of the unmodulated radiation, so that when the average intensity of the radiation reaching the surface equals the threshold level the modulator is at the centre of its range of modulation. EP—A—44 121 is concerned especially with driving the beam modulator with a triangular wave, the modulator having a sinusoidal relationship between its drive voltage and its radiation transfer function. EP—A—45 117 is concerned especially with a feedback system which monitors the second harmonic distortion in the recording beam and controls the modulator to reduce that distortion.

The above mentioned EP—A—5316 discloses apparatus for writing a frequency modulated signal upon a disc member mounted on a turntable. The turntable is driven by a motion control assembly which rotates the disc precisely in a circle at a constant rate of rotation and a translational drive assembly for translating the writing beam at a very constant, and very low velocity along a radius of the rotating disc. The rotational drive of the disc is synchronised with the translational drive of the writing beam to create a spiral track of predetermined pitch. In a preferred embodiment, the spacing between adjacent tracks of the spiral is two microns, centre to centre. The indicia is formed having a width of one micron. This leaves an intertrack or guard area of one micron between indicia in adjacent tracks. If desired, the indicia can be formed as concentric circles by translating in incremental steps rather than by translating at a constant velocity as just described.

A linearly polarised ion laser is used as the source of the writing beam. A Pockels cell is used to rotate the plane of polarisation of the writing beam with respect to its fixed plane of linear polarisation. A linear polariser attenuates the rotated writing beam in an amount proportional to the difference in polarisation between the light in the writing beam and the axis of the linear polariser. The combination of a Pockels cell and linear polariser modulates the writing beam with the video information to be stored. This modulation follows the pattern provided by control signals furnished by a Pockels cell driver.

The video signal to be recorded is applied to a frequency modulator circuit. The output from the modulator circuit is a rectangular wave whose frequency is proportional to the video signal. The duration of each cycle of the rectangular waveform is variable as is characteristic of a frequency modulated signal. As is characteristic of a rectangular wave, it has an upper voltage level and a lower voltage level. The upper and lower voltage levels of the rectangular wave are amplified by a Pockels cell driver and used to control the Pockels cell. The Pockels cell changes the angle of polarisation of the light passing therethrough in response to the instantaneous voltage level of the control signal supplied by the Pockels cell driver.

The intensity of the light beam passing from the Pockels cell linear polariser combination conforms with the control signal and will be alternately above and below the level at which it can affect a light responsive coating to produce the first and second indicia.

According to the present invention in a method of writing a signal information track on a disc having a surface capable of responding to a certain intensity of laser or other radiation (the threshold level) by being converted from having one radiation reflecting characteristic to having a second characteristic, a beam of radiation is directed at a local point along the track and is modulated in intensity as the beam moves along the track in accordance with the signal information which is in the form of a modulated continuous triangular shaped voltage waveform in which amplitude varies linearly with time by a modulator having a sinusoidal relationship between its control voltage and its radiation transfer function.

The invention may be carried into practice in various ways and one embodiment will be described with reference to the accompanying drawings in which:—

FIGURE 1 is a block diagram of a disc writing apparatus;

FIGURE 2 is a schematic diagram of a feedback circuit for use in the write apparatus shown in FIGURE 1; and

FIGURE 3 shows various waveforms used in illustrating the operation of the apparatus.

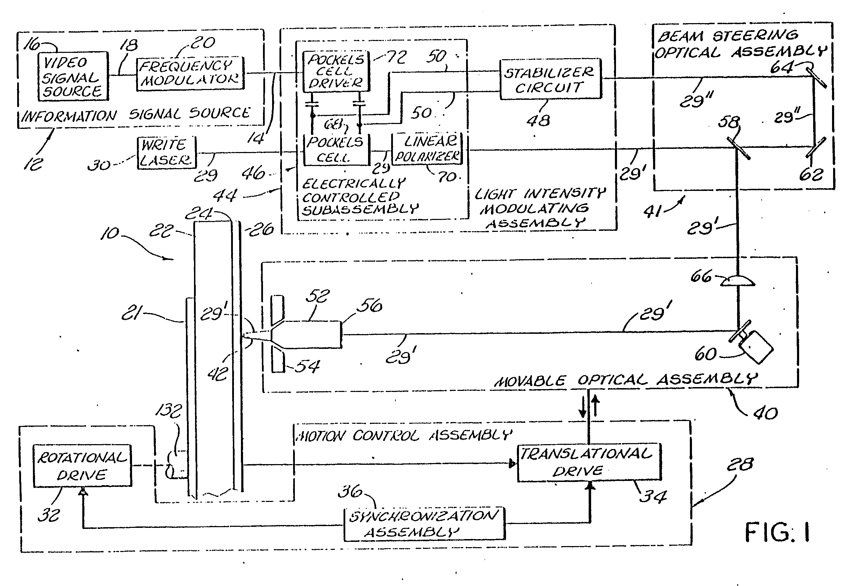

The apparatus for storing video information in the form of a frequency modulated signal upon an information storage member 10 is shown with reference to FIGURE 1. An information signal source circuit 12 is employed for providing an information signal to be recorded. This information signal present on a line 14 is a frequency modulated signal having its information content in the form of a carrier frequency having frequency changes in time representing said information to be recorded. The information signal source circuit 12 employs a video signal circuit 16 for providing an information signal on a line 18 having its information content in the form of a voltage varying with time. A frequency modulator circuit 20 is responsive to the video signal circuit 16 for converting the voltage varying with time signal to the frequency modulated signal on the line 14.

The information storage member 10 is mounted upon a turntable 21. It includes a substrate 22 having a first surface 24 and a light responsive coating 26 covering the first surface 24. A motion control assembly 28 imparts uniform motion to the storage member 10 relative to a write beam 29' generated by a light source 30. The motion control assembly 28 includes a rotational drive circuit 32 for providing uniform rotational motion to the information storage member 10 and translational drive circuit 34 synchronised with the rotational drive circuit 32 for moving the focused light beam 29' radially across the coating 26. The motion control assembly 28 further includes an electrical synchronizing assembly 36 for maintaining a constant relationship between the rotational motion imparted to the member 10 by the rotational drive circuit 32 and the translational motion imparted to the light beam 29 by the translational drive circuit 34.

The light source 30 comprises a writing laser for producing a collimated writing beam of polarised monochromatic light.

A movable optical assembly 40 and a beam steering optical assembly 41 collectively define an optical path for the light beam 29 issuing from the light source 30. The optical assemblies image the read beam 29 into a spot 42 upon the coating 26 carried by the storage member 10. The optical path is also represented by the line identified by the numerals 29 and 29'.

A light intensity modulating assembly 44 is positioned in the optical path 29 between the light source 30 and the coating 26.

The light beam 29 is modulated as it passes through the light intensity modulating assembly 44. Thereafter the modulated light beam, now represented by the numeral 29' is imaged upon the coating 26 by the optical assemblies 40 and 41. As the modulated light beam 29' impinges upon the coating 26, indicia are formed in said coating 26 representative of the frequency modulated signal to be stored.

The light intensity modulating assembly 44 includes an electrically controllable subassembly 46 which is responsive to the frequency modulator 20 for varying the intensity of the light beam 29' above a predetermined intensity at which the focused beam 29' alters the coating 26 carried by the information storage member 10.

When the coating 26 carried by the information storage member 10 is a metal coating, the electrically controllable subassembly 46 varies the intensity of the writing beam 29' above a first predetermined intensity at which the focused beam 29' melts the metal coating without vaporising it and further varies the intensity of the writing beam below the predetermined intensity at which the focused beam 29' fails to melt the metal surface.

The light intensity modulating assembly 44 includes a stabilising circuit 48 for providing a feedback signal which is connected to the electrically controllable sub-assembly 46 over the lines 50.

The movable optical assembly 40 includes an objective lens 52 and a hydrodynamic air bearing 54 for supporting the lens 52 above the coating 26. A planar convex diverging lens 66 positioned in the light beam 29' is employed for spreading the substantially parallel light beam 29' to at least fill the entrance aperture 56 of the objective lens 52.

The beam steering optical assembly 41 further includes a number of mirror members 58, 60, 62 and 64 for folding the light beams 29' and 29" as desired.

The sub-assembly 46 includes a Pockels cell 68, a linear polariser 70 and a Pockels cell driver 72. The Pockels cell driver 72 is essentially a linear amplifier and is responsive to the frequency modulated signal on the line 14. The output from the Pockels cell driver 72 provides driving signals to the Pockels cell 68 for rotating the plane of polarisation of the laser beam 29. The linear polariser 70 is orientated in a predetermined relatinship with respect to the original plane of polarisation of the laser beam 29 issuing from the laser source 30.

Depending upon the individual Pockels cell 68, a voltage change of the order of 100 volts causes the cell to rotate the plane of polarisation of the light passing therethrough a full ninety degrees. The Pockels cell driver functions to amplify the output from the information signal source 12 to a peak-to-peak output swing of 100 volts. This provides a proper input driving signal to the Pockels Cell 68.

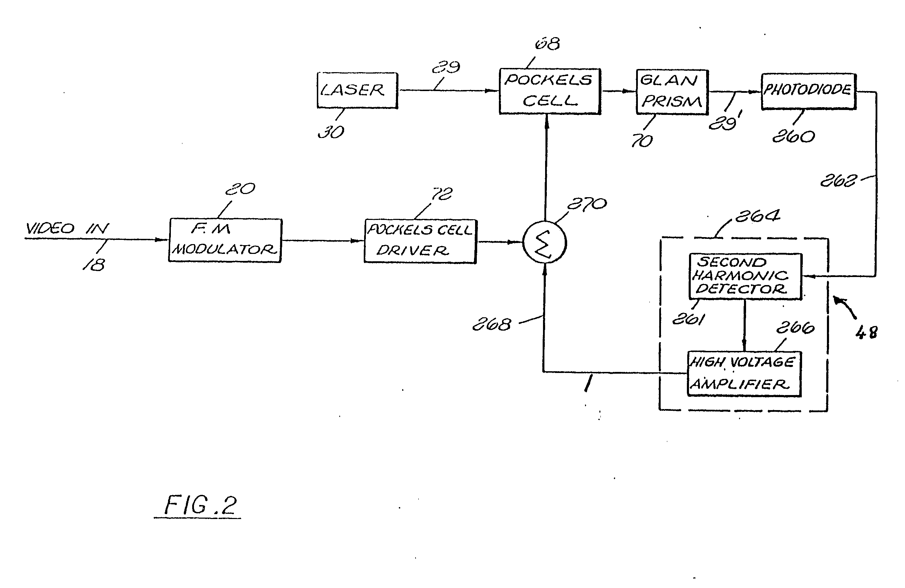

The stabilising feedback circuit is used to compensate for any second harmonic distortion products contained in the video information input signal which would show up in the modulated light beam at 29'. As shown in FIGURE 2, the output from the FM modulator 20 is applied to a Pockels cell driver 72 for developing the voltage required to drive the Pockels cell through its zero to ninety degree rotational shift. The unmodulated light beam 29 from the laser 30 is applied to the Pockels cell 68 as previously described.

The purpose of the Pockels cell feedback circuit is to bias the Pockels cell 68 so that the output light signal detected at a photo diode 260 is as free of second harmonic content as possible.

The second harmonic distortion is introduced into the modulated light beam at 29' from a plurality of sources. A first of such sources is the non-linear transfer functions of both the Pockels cell 68 and the Glan prism 70. When the input video signal on the line 18 itself contains second harmonic distortion products this further increases the total second harmonic distortion products in the lightbeam at 29'.

A second harmonic detector 261 generates a voltage which is approximately linear in the ratio of the second harmonic to the fundamental of the output light beam. Furthermore, the output signal reflects the phase characteristics of the second harmonic and if the second harmonic is in phase with the fundamental, the output of the second harmonic detector is in a first voltage level, i.e., a positive level. If the second harmonic is opposite in phase with the fundamental, then the output of the second harmonic detector is at a second voltage level. i.e. a negative voltage level. The output from the second harmonic detector is amplified through a high voltage amplifier 266 which provides a range of zero to three hundred volts of d.c. bias. This d.c. bias is summed with the signal from the FM modulator 20, amplified in the Pockels cell driver 72, and applied to the Pockels cell 68.

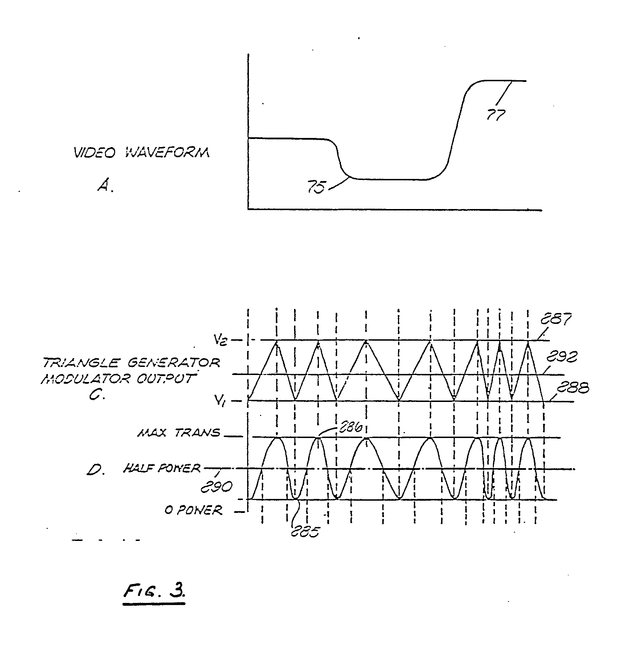

FIGURE 3 shows a series of waveforms illustrating an improved form of light modulation of a writing light beam 29. Line A of FIGURE 3 shows an idealised or simplified video waveform that is typically supplied as a video signal from a video tape recorder or television camera to the FM modulator circuit 20. The waveform shown on line C shows the output generated by an FM modulator 20 having a triangular shaped output waveform. The triangular shaped waveform is used to drive the Pockels cell 68 for light modulation of a constant intensity light beam applied through the Pockels cell.

The frequencies contained in the waveform C represent the voltage levels of the video waveform shown in Line A. By inspection, it can be seen that the lower amplitude region of the video waveform generally indicated by the numeral 75 corresponds to the low carrier frequencies and high amplitude regions of the video waveform as generally indicated at 77 corresponds to the higher frequencies shown in line C. It is the custom and practice of the television industry to utilise a one volt peak to peak voltage signal having voltage variations in time as the video signal generated by a television camera. The advantage of using a triangular shaped waveform for driving a Pockels cell 68 is to match the Pockels cell's transfer characteristic with a selected waveform of the modulating signal to achieve a sinusoidal modulation of the light beam passing through the Pockels cell and to the Glan prism 78. The triangular waveform shown in line C is a linear voltage change with time. The linear voltage change versus time of the triangular driving waveform when multiplied by a sinusoidal voltage change versus light transfer function of the Pockels cell 68 gives a sinusoidally varying light intensity output from the Glan prism.

The waveform shown on line D illustrates the sinusoidal waveform which corresponds to the light intensity output from the Glan prism when the Pockels cell is driven by the triangular waveform shown on line C.

Referring specifically to the bottommost point at 285 and the topmost point at 286 of the waveform shown on line D, the point exactly equally distant from each is identified as the half power point.

The peak to peak voltage of the triangular waveform is represented by a first maximum voltage level $V_2$ shown on line 287 of line C and by a second minimum voltage level $V_1$ on line 288. The voltage differential between points 287 and 288 is the driving voltage for the Pockels cell 68. This voltage differential is adjusted to equal that voltage required by the Pockels cell 68 to give a ninety degree rotation of the output polarisation of the light passing through the Pockels cell 68. The bias on the Pockels cell is set such that voltage levels $V_1$ and $V_2$ correspond to the zero degree rotation and the ninety degree rotation respectively of the light beam passing through the Pockels cell 68. The forty-five degree rotation of a light beam is half way between the two extremes of a triangle waveform. That half-way voltage is always the same for the Pockels cell 68. But the half-way voltage with respect to zero volts may drift due to thermal instabilities causing the half power voltage point to drift also.

The bias is automatically adjusted to minimise second harmonic distortion as described above, or to maintain the average intensity of the modulated beam at the threshold level.

While the waveform shown on line C shows the triangular wave shape generated by the FM modulator 20, it also represents the wave shape of the signal generated by the Pockels cell driver 72. The output from the FM modulator is typically in a smaller voltage range, typically under 10 volts while the output from the Pockels cell driver 72 typically swings 100 volts in order to provide suitable driving voltage to the Pockels cell 68 to drive it from its zero rotational state to its ninety degree rotational state. In discussing the voltage levels $V_1$ and $V_2$ and the lines 288 and 287, respectively, representing such voltage points, reference is made to line C because the output from the Pockels cell driver 68 has the identical shape while differing in the amplitude of the waveform.

The threshold power level of the information bearing layer 26 is defined as that power required to form indicia in the information bearing layer in response to the impinging light beam. For a metal surface, the thermal threshold point is that power required to melt the metal layer and have the metal layer retract from the heated region of impingement. For a photoresist layer, the threshold power is that power level required to supply sufficient photons to completely expose the photoresist information bearing layer.

In operation, the output power from the laser is adjusted such that the half power point of the Pockels cell-Glan prism combination provides sufficient energy to equal the threshold power level of the information bearing member employed. The matching of the half power point of the Pockels cell-Glan prism combination together with the use of the triangular modulation of the information and preferably with the reduction of second harmonic distortion of the modulated light beam, ensures highest recording fidelity of the video frequency signal to be recorded and ensures minimum intermodulation distortion of the signal played back from the video disc recording member.

## Claims

1. A method of writing a signal information track on a disc (10) having a surface (26) capable of responding to a certain intensity of laser or other radiation (the threshold level) by being converted from having one radiation reflecting characteristic to having a second radiation reflecting characteristic, in which the intensity of the radiation (29') directed at a local point along the track is modulated in accordance with an information signal, characterised in that the information signal is in the form of a modulated continuous triangular shaped voltage waveform composed of portions in which amplitude varies linearly with time (Figure 3c), and modulation is by a modulator (68) having a sinusoidal relationship between its control voltage and its radiation transfer function.

2. A method as claimed in Claim 1 in which the slopes of the portions of the modulated triangular waveform represent the instantaneous amplitudes of an amplitude modulated video information signal (73).

3. A method as claimed in either preceding claim, in which the modulator (68) produces an angular shift in the plane of polarisation of the radiation.

4. A method as claimed in any preceding claim in which the average intensity of the modulated radiation is maintained at a set level.

5. A method as claimed in Claim 4 in which the average intensity of the modulated radiation is maintained constant at the threshold level.

6. A method of writing as claimed in any preceding claim in which the signal is a video signal and in which as the beam moves along the track, first indicia (37) are produced while the beam intensity is above the threshold level and second indicia (58) are produced while it is below that level, the intensity of the beam being controlled automatically (50a, b) so that the lengths of the intervals when the intensity of the beam of radiation is above the threshold level are equal to the lengths of the immediately adjacent intervals when the intensity is below the threshold level.

7. A method of writing as claimed in any of Claims 1—3, wherein the intensity of the beam is controlled automatically by sensing (261) the amount of second harmonic distortion present in said modulated beam prior to its impingement on said responsive surface for generating a bias control signal; and by using said bias control signal for biasing said modulator to produce a modulated beam having minimum second harmonic distortion.

## Patentansprüche

1. Verfahren zum Schreiben einer Informationsspur auf eine Scheibe (10), deren Oberfläche (26) auf eine bestimmte Intensität der Strahlung eines Lasers (30) oder anderer Strahlung (Schwellenhöhe) in der Weise anzusprechen vermag, daß die Oberfläche aus einem Zustand mit einer bestimmten Strahlungsreflexionseigenschaft in einen Zustand mit einer zweiten Strahlungsreflexionseigenschaft umgewandelt wird, in welchem ein auf einen Ortspunkt längs der Spur gerichtetes Strahlenbündel (29') nach Maßgabe eines Informationssignals intensitätsmoduliert wird, dadurch gekennzeichnet, daß das Informationssignal die Form einer ungedämpften Dreieckswelle hat, die sich zusammensetzt aus Abschnitten, in denen die Amplitude sich linear mit der Zeit ändert (Fig. 3C), und daß die Modulation durch einen Modulator (68) erfolgt, der eine sinusförmige Beziehung zwischen seiner Steuerspannung und seiner Strahlungsübertragungsfunktion hat.

2. Verfahren nach Anspruch 1, dadurch gekennzeichnet, daß die Neigungen der Abschnitte der modulierten Dreiecks-Wellenform die Augenblicksamplituden eines amplitudenmodulierten Video-Informationssignals (73) darstellen.

3. Verfahren nach Anspruch 1 oder 2, dadurch gekennzeichnet, daß der Modulator (68) eine Winkelverdrehung der Polarisationsebene der Strahlung hervorbringt.

4. Verfahren nach einem der vorhergehenden Ansprüche, dadurch gekennzeichnet, daß die mittlere Intensität der modulierten Strahlung auf einer vorgegebenen Höhe gehalten wird.

5. Verfahren nach Anspruch 4, dadurch gekennzeichnet, daß die mittlere Intensität der modulierten Strahlung konstant auf der Schwellenhöhe gehalten wird.

6. Verfahren zum Schreiben nach einem der vorhergehenden Ansprüche, dadurch gekennzeichnet, daß es sich bei dem Signal um ein Videosignal handelt, und daß, wenn der Strahl sich längs der Spur bewegt, erste Zeichen (37) erzeugt werden, während die Strahlintensität oberhalb der Schwellenhöhe liegt, und zweite Zeichen (38) erzeugt werden, während er unterhalb dieser Höhe liegt, wobei die Intensität des Strahls automatisch (50a, b) so gesteuert wird, daß die Längen der Intervalle, wenn die Intensität des Strahlenbündels oberhalb der Schwellenhöhe liegt, gleich den Längen der unmittelbar benachbarten Intervalle ist, wenn die Intensität unterhalb der Schwellenhöhe liegt.

7. Verfahren zum Schreiben nach einem der Ansprüche 1 bis 3, dadurch gekennzeichnet, daß die Intensität des Strahls automatisch geregelt wird durch Abtasten (261) des Betrages der Verzerrung der 2. Harmonischen, die in dem modulierten Strahl vor dessen Auftreffen auf die darauf ansprechende Oberfläche auftritt, zum Erzeugen eines Vorspannungssteuersignals und durch Anwendung dieses Vorspannungssteuersignals zum Anlegen einer Vorspannung an den Modulator, um einen modulierten Strahl zu erzeugen, der einen Kleinstwert der Verzerrung der 2. Harmonischen aufweist.

## Revendications

1. Méthode d'écriture d'une piste d'information sur un disque (10) ayant une surface (26) capable de répondre à une certaine intensité de laser ou autre rayonnement (le niveau de seuil) en étant convertie d'une caractéristique de réflexion de rayonnement à une seconde caractéristique de réflexion de rayonnement, dans laquelle l'intensité du rayonnement (29') dirigée à un point local le long de la piste est modulée selon un signal d'information, caractérisée en ce que le signal d'information est sous forme d'un signal de tension triangulaire continu modulé composé de parties dans lesquelles les amplitudes varient linéairement dans le temps (figure 3C), et la modulation est faite par un modulateur (68) ayant une relation sinusoïdale entre sa tension de commande et sa fonction de transfert de rayonnement.

2. Méthode selon la revendication 1, dans laquelle les pentes des parties du signal triangulaire modulé représentent les amplitudes instantanées d'un signal d'information vidéo modulé en amplitude (73).

3. Méthode selon l'une des revendications précédentes, dans laquelle le modulateur (68) produit un décalage angulaire dans le plan de polarisation du rayonnement.

4. Méthode selon l'une des revendications précédentes, dans laquelle l'intensité moyenne du rayonnement modulé est maintenue à un niveau établi.

5. Méthode selon la revendication 4, dans laquelle l'intensité moyenne du rayonnement modulé est maintenue constante au niveau de seuil.

6. Méthode d'écriture selon l'une des revendications précédentes, dans laquelle le signal est un signal vidéo et dans laquelle lorsque le faisceau se déplace le long de la piste, des premiers indices (37) sont produits alors que l'intensité du faisceau est au-dessus du niveau de seuil et des seconds indices (58) sont produits alors qu'elle est en-dessous de ce niveau, l'intensité du faisceau étant contrôlée automatiquement (50a, b) de manière que la longueur des intervalles lorsque l'intensité du faisceau de rayonnement est au-dessus du niveau de seuil soit égale aux longueurs des intervalles immédiatement adjacents lorsque l'intensité est en-dessous du niveau de seuil.

7. Méthode d'écriture selon l'une des revendications 1—3, où l'intensité des faisceaux est contrôlée automatiquement en détectant (261) la quantité de distorsion de seconde harmonique présente dans le faisceau modulé avant son impact sur la surface sensible précitée pour produire un signal de contrôle de polarisation; et en utilisant ledit signal de contrôle de polarisation pour polariser le modulateur précité pour produire un faisceau modulé ayant une distorsion de seconde harmonique minimale.

FIG. 1

0 044 121

FIG.2

VIDEO WAVEFORM

A.

TRIANGLE GENERATOR
MODULATOR OUTPUT
C.

$V_2$ —

$V_1$ —

287

292

288

MAX TRANS —

D.  HALF POWER —

290

0 POWER —

286

285

FIG. 3.

3